(19) Europäisches Patentamt
European Patent Office
Office européen des brevets

(11) EP 4 279 541 A1

(12) EUROPEAN PATENT APPLICATION
published in accordance with Art. 153(4) EPC

(43) Date of publication:
**22.11.2023 Bulletin 2023/47**

(21) Application number: **22739349.3**

(22) Date of filing: **07.01.2022**

(51) International Patent Classification (IPC):
***C08K 5/098*** (2006.01) ***C08K 5/17*** (2006.01)
***C08K 5/3435*** (2006.01) ***C08L 23/08*** (2006.01)
***C08L 23/10*** (2006.01) ***C08K 3/013*** (2018.01)
***C08K 3/34*** (2006.01)

(52) Cooperative Patent Classification (CPC):
**C08K 3/013; C08K 3/34; C08K 5/098; C08K 5/17; C08K 5/3435; C08L 23/08; C08L 23/10**

(86) International application number:
**PCT/JP2022/000345**

(87) International publication number:
**WO 2022/153940 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.01.2021 JP 2021003562**

(71) Applicant: **SUMITOMO CHEMICAL COMPANY, LIMITED**
**Tokyo 103-6020 (JP)**

(72) Inventors:
- **URANO, Wakaba**
  **Ichihara-shi, Chiba 299-0195 (JP)**
- **HIGUCHI, Yu**
  **Ichihara-shi, Chiba 299-0195 (JP)**

(74) Representative: **Global IP Europe Patentanwaltskanzlei**
**Pfarrstraße 14**
**80538 München (DE)**

# (54) PROPYLENE-BASED RESIN COMPOSITION

(57) Provided is a propylene-based resin composition that can be molded into molded bodies that have high thermal stability and emit less odor. The propylene-based resin composition contains (A) a propylene-based polymer, (B) an inorganic filler; and (C) a hindered amine light stabilizer. The amine compound concentration in a volatile gas generated when a molded body formed by molding the propylene-based resin composition is heated at 100°C for 15 minutes is 3 to 40 mass ppm.

EP 4 279 541 A1

## Description

TECHNICAL FIELD

The present invention relates to a propylene-based resin composition.

BACKGROUND ART

Propylene-based resin compositions containing propylene-based polymers are used in a wide range of applications due to their good mechanical properties. Molded bodies of propylene-based resin compositions can be particularly suitably used as automotive interior parts, such as instrument panels and door trims.

Automotive cabins can be closed spaces in which the temperature reaches as high as, for example, 50°C or higher, in particular in summer. Automotive interior parts thus need to have resistance to thermal degradation, that is, high thermal stability.

In particular, when propylene-based resin compositions contain, for example, inorganic fillers, such as talc, the interior parts composed of molded bodies made of the propylene-based resin compositions may emit odor that causes discomfort to drivers and passengers or other persons. To prevent or reduce emission of such odor, a propylene-based resin composition containing talc as an inorganic filler further contains zinc bis(stearate) (see Non-Patent Document 1).

PRIOR ART DOCUMENTS

NON-PATENT DOCUMENT

Non-Patent Document 1: Research on Technology of Making to Compound of Plastics (3rd Report), Prevention of Bad Smell from Polypropylene/Talc Compound, Ichiro Shimohara et al. (2001), Seikei-Kakou, vol. 44, pp. 44-47.

SUMMARY OF THE INVENTION

PROBLEMS TO BE SOLVED BY THE INVENTION

However, the propylene-based resin composition disclosed in Non-Patent Document 1 may emit less odor but fails to have sufficient thermal stability.

There is therefore a need of a propylene-based resin composition that can be molded into interior parts (molded bodies) that have high thermal stability and emit less odor.

MEANS FOR SOLVING THE PROBLEMS

The inventors of the present invention have carried out intensive studies to solve the problem described above and as a result, have completed the present invention.

Specifically, the present invention provides the following [1] to [6].

[1] A propylene-based resin composition containing:

(A) a propylene-based polymer;
(B) an inorganic filler; and
(C) a hindered amine light stabilizer,

wherein an amine compound concentration in a volatile gas generated when a molded body formed by molding the propylene-based resin composition under the following molding conditions X is heated at 100°C for 15 minutes is 3 to 40 mass ppm:

Molding conditions X: molten resin temperature 200°C, mold temperature 40°C, filling pressure 15 MPa, holding pressure 4.3 MPa, holding pressure time 40 sec, molded body ejection temperature ≤ 60°C, and total cycle time 60 sec.

[2] The propylene-based resin composition according to [1], wherein the (B) inorganic filler is talc.

[3] The propylene-based resin composition according to [1] or [2], wherein the (B) inorganic filler contains at least one selected from the group consisting of glass, calcium carbonate, and basic magnesium sulfate.

[4] The propylene-based resin composition according to any one of [1] to [3], further comprising (D) an olefin-based polymer,

wherein the (D) olefin-based polymer is at least one polymer selected from the group consisting of ethylene-1-butene copolymer, ethylene-1-hexene copolymer, ethylene-1-octene copolymer, ethylene-1-decene copolymer, ethylene-(3-methyl-1-butene) copolymer, and a copolymer of ethylene and an α-olefin having a cyclic structure.
[5] The propylene-based resin composition according to any one of [1] to [4], wherein a content of the (C) hindered amine light stabilizer is 0.3 parts by mass or less when the total mass of the (A) propylene-based polymer and the (B) inorganic filler is 100 parts by mass.
[6] The propylene-based resin composition according to any one of [1] to [6], wherein the (C) hindered amine light stabilizer is other than bis(2,2,6,6-tetramethyl-4-piperidyl) sebacate.
[7] The propylene-based resin composition according to any one of [1] to [6], wherein the amine compound concentration in the volatile gas is 3 to 30 mass ppm.
[8] The propylene-based resin composition according to any one of [1] to [7], further containing (E) a metal-based additive,
wherein the (E) metal-based additive is at least one compound selected from the group consisting of fatty acid zinc salts and fatty acid aluminum salts.
[9] The propylene-based resin composition according to [8], wherein the (E) metal-based additive is fatty acid zinc.
[10] A molded body containing the propylene-based resin composition according to any one of [1] to [9].
[11] A method for producing a molded body containing the propylene-based resin composition according to claim 10, the method including step (α') and step (β'):

Step (α'): a step of pulverizing a molded body containing the propylene-based resin composition according to any one of claims 1 to 9 to form a pulverized material,
Step (β'): a step of molding the pulverized material into a molded body containing the propylene-based resin composition according to any one of claims 1 to 9.

## EFFECT OF THE INVENTION

The present invention can provide a propylene-based resin composition that can be molded into interior parts (molded bodies) that have high thermal stability and emit less odor.

## MODE FOR CARRYING OUT THE INVENTION

Embodiments of the present invention will be described below in detail. The present invention is not limited to specific embodiments described below and can be modified as appropriate without departing from the spirit of the present invention.
In this description, "AA to BB" refers to AA or more and BB or less. AA and BB represent values satisfying AA < BB. The unit of AA is the same as the unit just after BB, unless otherwise specified.
In this description, the term "monomer unit" refers to a constitutional unit having a structure formed by polymerizing the monomer.
In this description, the term "a-olefin" refers to an olefin having a carbon-carbon double bond at its terminal.

### 1. Propylene-Based Resin Composition

A propylene-based resin composition according to an embodiment of the present invention contains:

(A) a propylene-based polymer;
(B) an inorganic filler; and
(C) a hindered amine light stabilizer,

wherein an amine compound concentration in a volatile gas generated when a molded body formed by molding the propylene-based resin composition under the following molding conditions X is heated at 100°C for 15 minutes is 3 to 40 mass ppm:
Molding conditions X: molten resin temperature 200°C, mold temperature 40°C, filling pressure 15 MPa, holding pressure 4.3 MPa, holding pressure time 40 sec, molded body ejection temperature ≤ 60°C, and total cycle time 60 sec.
Components that may be contained in the propylene-based resin composition of this embodiment will be described below.

(1) Component (A): Propylene-Based Polymer

The propylene-based polymer includes more than 50 mass% of a propylene unit relative to the total mass (100 mass%) of the constitutional units. The propylene unit in the propylene-based polymer is normally 100 mass% or less.

Examples of the propylene-based polymer include a propylene homopolymer; and copolymers of propylene and other monomers polymerizable with propylene. The copolymers may be random copolymers or block copolymers.

Examples of other monomers copolymerizable with propylene include olefins other than propylene (e.g. ethylene, and olefins with 4 or more carbon atoms).

The olefins with 4 or more carbon atoms may be linear olefins or branched olefins. The olefins with 4 or more carbon atoms may be olefins having a cyclic structure, and may be $\alpha$-olefins having a cyclic structure, such as vinylcyclopropane or vinylcyclobutane.

Examples of olefins copolymerizable with propylene, other than propylene, include $\alpha$-olefins other than propylene (e.g. ethylene, propylene, 1-butene, 1-pentene, 1-hexene, 4-methyl-1-pentene, 1-octene, and 1-decene). The olefins copolymerizable with propylene, other than propylene, are preferably ethylene, propylene, 1-butene, 1-pentene, 1-hexene, 4-methyl-1-pentene, 1-octene, and 1-decene, more preferably ethylene, propylene, 1-butene, 1-hexene, and 1-octene.

The propylene-based resin composition of this embodiment may contain two or more component (A) propylene-based polymers as the component (A) propylene-based polymers.

The propylene-based resin composition of this embodiment may include, as the component (A) propylene-based polymer, a propylene homopolymer (component (A-2)) produced by polymerizing only propylene monomers, or a propylene-based polymer produced by polymerizing two or more types of monomers in combination at any ratio.

Examples of the component (A) propylene-based polymer include a component (A-2) propylene homopolymer; and random copolymers of propylene and other monomers copolymerizable with propylene (hereinafter also referred to as propylene-based random copolymers).

Examples of combinations of two or more component (A) propylene-based polymers when two or more component (A) propylene-based polymers are contained include a combination of two or more types of propylene homopolymers having different weight average molecular weights or other properties; and a combination of a polymer (I) and a polymer (II) described below.

The propylene-based resin composition of this embodiment may contain a component (A-1) heterophasic propylene polymer material as the component (A) propylene-based polymer.

The component (A-1) heterophasic propylene polymer material refers to a material that contains two or more propylene-based polymers and in which the two or more propylene-based polymers are incompatible with each other to form different phases.

Examples of the component (A-1) heterophasic propylene polymer material include a combination of the polymer (I) and the polymer (II) described below.

The polymer (I) is a polymer containing more than 80 mass% and 100 mass% or less of the propylene unit relative to the total mass of the constitutional units.

The polymer (II) is a copolymer of a propylene unit and at least one monomer unit selected from the group consisting of an ethylene unit and $\alpha$-olefin units having 4 or more carbon atoms. The polymer (II) is preferably a polymer having more than 0 mass% and 90 mass% or less of a propylene unit relative to the total mass of the constitutional units, more preferably a polymer having more than 0 mass% and 80 mass% or less of the propylene unit.

The polymer (I) may be a propylene homopolymer or a copolymer of propylene and another monomer. The polymer (I) and the polymer (II) may each be made up of a single polymer or may each include two or more polymers.

To improve the rigidity and impact resistance of a molded body molded from the propylene-based resin composition, the propylene-based polymer preferably contains at least one selected from the group consisting of a propylene homopolymer and heterophasic propylene polymer materials.

To improve the rigidity of a molded body molded from the propylene-based resin composition, the isotactic pentad fraction (also referred to as an "mmmm" fraction) of the propylene-based polymer as measured by $^{13}C$-NMR is preferably 0.97 or more, more preferably 0.98 or more. As the isotactic pentad fraction of the propylene-based polymer approaches 1, the molecular structure of the propylene-based polymer has higher stereoregularity, and the propylene-based polymer has higher crystallinity. When the propylene-based polymer is a copolymer, the isotactic pentad fraction of a chain of propylene units in the copolymer can be measured.

To improve processability in molding the propylene-based resin composition, the melt flow rate (MFR) of the propylene-based polymer measured at 230°C under a load of 2.16 kgf in accordance with JIS K7210-1:2014 and K7210-2:2014 is preferably 1 g/10 min or more, more preferably 3 g/10 min or more, and preferably 500 g/10 min or less, more preferably 3 g/10 min to 300 g/10 min.

The propylene-based polymer can be produced by, for example, the polymerization method described below using a polymerization catalyst.

Examples of the polymerization catalyst include Ziegler catalyst systems; Ziegler-Natta catalyst systems; a catalyst system containing an alkylaluminoxane and a Group 4 transition metal compound having a cyclopentadienyl ring; a catalyst system containing a Group 4 transition metal compound having a cyclopentadienyl ring, a compound that reacts with the Group 4 transition metal compound to form an ionic complex, and an organoaluminum compound; and a catalyst system produced by modifying inorganic particles (e.g., silica, clay minerals) with a catalyst component (e.g., a Group 4 transition metal compound having a cyclopentadienyl ring, a compound that forms an ionic complex, an organoaluminum compound) such that the catalyst component is supported on the inorganic particles. A prepolymerized catalyst prepared by prepolymerizing a monomer, such as ethylene or an α-olefin, in the presence of such a catalyst system may be used. Examples of Ziegler-Natta catalyst systems include a catalyst system including a titanium-containing solid transition metal component and an organometallic component in combination.

Examples of such catalyst systems include catalyst systems described in JP-A-61-218606, JP-A-5-194685, JP-A-7-216017, JP-A-9-316147, JP-A-10-212319, and JP-A-2004-182981.

Examples of the polymerization method include bulk polymerization, solution polymerization, and gas phase polymerization. Bulk polymerization refers to polymerization using, as a medium, an olefin in the form of liquid at a polymerization temperature. Solution polymerization refers to polymerization in an inert hydrocarbon solvent, such as propane, butane, isobutane, pentane, hexane, heptane, or octane. Gas phase polymerization refers to polymerization of a gaseous monomer in a medium of the gaseous monomer.

Examples of the type of polymerization in the polymerization method include batch polymerization, continuous polymerization, and a combination thereof. The type of polymerization may be multi-stage polymerization using two or more polymerization reactors connected in series.

Various conditions (e.g., polymerization temperature, polymerization pressure, monomer concentration, catalyst loading amount, polymerization time) in the polymerization method can be appropriately determined depending on the intended propylene-based polymer.

To remove the residual solvent contained in the produced propylene-based polymer, ultra-low molecular weight oligomers generated as by-products during production, and other substances, the produced propylene-based polymer may be kept at a temperature at which impurities such as the residual solvent and the oligomers may volatilize and that is lower than the melting point of the propylene-based polymer in the process for producing the propylene-based polymer. Examples of the method for removing impurities such as the residual solvent and the oligomers include methods described in JP-A-55-75410 and JP-B2-2565753.

To improve the fluidity of the molten propylene-based resin composition and the toughness of a molded body molded from the propylene-based resin composition, the limiting viscosity number [η] of the component (A-2) propylene homopolymer is preferably 0.1 to 5 dL/g, more preferably 0.5 to 5 dL/g, still more preferably 0.7 to 4 dL/g. The limiting viscosity number [η] is a value measured at 135°C by using tetralin as a solvent.

To improve the fluidity of the molten resin composition and the toughness of a molded body molded from the resin composition, the molecular weight distribution Mw/Mn of the propylene homopolymer is preferably 2 or more and less than 10, more preferably 3 to 8, still more preferably 3 to 7. Mw represents a weight average molecular weight, and Mn represents a number average molecular weight. The molecular weight distribution is a value measured by gel permeation chromatography (GPC).

Examples of the propylene-based random copolymers include a random copolymer including a propylene unit and an ethylene unit (hereinafter also referred to as a random polymer (1)); a random copolymer including a propylene unit and an α-olefin unit having 4 or more carbon atoms (hereinafter also referred to as a random polymer (2)); and a random copolymer including a propylene unit, an ethylene unit, and an α-olefin unit having 4 or more carbon atoms (hereinafter also referred to as a random polymer (3)).

The α-olefin having 4 or more carbon atoms that may constitute the propylene-based random copolymers is preferably an α-olefin having 4 to 10 carbon atoms. Examples of the α-olefin having 4 to 10 carbon atoms include 1-butene, 1-pentene, 1-hexene, 4-methyl-1-pentene, 1-octene, and 1-decene. Preferred are 1-butene, 1-hexene, and 1-octene.

Examples of the random copolymer (2) include a propylene-1-butene random copolymer, a propylene-1-hexene random copolymer, a propylene-1-octene random copolymer, and a propylene-1-decene random copolymer.

Examples of the random copolymer (3) include a propylene-ethylene-1-butene copolymer, a propylene-ethylene-1-hexene copolymer, a propylene-ethylene-1-octene copolymer, and a propylene-ethylene-1-decene copolymer.

The content of the ethylene unit in the random copolymer (1) is preferably 0.1 to 40 mass%.

The content of the α-olefin unit having 4 or more carbon atoms in the random copolymer (2) is preferably 0.1 to 40 mass%, more preferably 0.1 to 30 mass%, still more preferably 2 to 15 mass%.

The total content of the ethylene unit and the α-olefin unit having 4 or more carbon atoms in the random copolymer (3) is preferably 0.1 to 40 mass%, more preferably 0.1 to 30 mass%, still more preferably 2 to 15 mass%.

The content of the propylene unit in each of the random copolymers (1) to (3) is preferably 60 to 99.9 mass%.

The polymer (I) in the component (A-1) heterophasic propylene polymer material is a polymer containing more

than 80 mass% and 100 mass% or less of the propylene unit relative to the total mass of the constitutional units, as described above. The total content of the monomer units other than the propylene unit in the polymer (I) is normally 0 mass% or more and less than 20 mass%, and may be 0 mass%, or 0.01 mass% or more relative to the mass (100 mass%) of the polymer (I).

Examples of the monomer units that the polymer (I) may have other than the propylene unit include an ethylene unit and $\alpha$-olefin units having 4 or more carbon atoms.

The $\alpha$-olefin having 4 or more carbon atoms that may constitute the polymer (I) is preferably an $\alpha$-olefin having 4 to 10 carbon atoms, more preferably 1-butene, 1-hexene, or 1-octene, still more preferably 1-butene.

Examples of the polymer (I) include propylene homopolymer, propylene-ethylene copolymer, propylene-1-butene copolymer, propylene-1-hexene copolymer, propylene-1-octene copolymer, propylene-ethylene-1-butene copolymer, propylene-ethylene-1-hexene copolymer, and propylene-ethylene-1-octene copolymer.

Of these polymers, the polymer (I) is preferably propylene homopolymer, propylene-ethylene copolymer, propylene-1-butene copolymer, or propylene-ethylene-1-butene copolymer. To improve the rigidity of a molded body molded from the propylene-based resin composition, the polymer (I) is preferably propylene homopolymer.

The polymer (II) is a copolymer of a propylene unit and at least one monomer unit selected from the group consisting of an ethylene unit and $\alpha$-olefin units having 4 or more carbon atoms, as described above.

The total content of the ethylene unit and the $\alpha$-olefin units having 4 or more carbon atoms in the polymer (II) is preferably 20 to 80 mass%, more preferably 20 to 60 mass% relative to the mass (100 mass%) of the polymer (II).

Suitable examples of the $\alpha$-olefin having 4 or more carbon atoms that may constitute the polymer (II) include $\alpha$-olefins having 4 to 10 carbon atoms, which are the same as examples of the $\alpha$-olefins that may constitute the polymer (I).

Examples of the polymer (II) include propylene-ethylene copolymer, propylene-ethylene-1-butene copolymer, propylene-ethylene-1-hexene copolymer, propylene-ethylene-1-octene copolymer, propylene-ethylene-1-decene copolymer, propylene-1-butene copolymer, propylene-1-hexene copolymer, propylene-1-octene copolymer, and propylene-1-decene copolymer. The polymer (II) is preferably propylene-ethylene copolymer, propylene-1-butene copolymer, or propylene-ethylene-1-butene copolymer, more preferably propylene-ethylene copolymer.

The content of the polymer (II) in the component (A-1) heterophasic propylene polymer material relative to the total mass (100 mass%) of the polymer (I) and the polymer (II) is preferably 1 to 50 mass%, more preferably 1 to 45 mass%, still more preferably 5 to 40 mass%, particularly preferably 8 to 32 mass%.

Examples of the component (A-1) heterophasic propylene polymer material in which the polymer (I) is a propylene homopolymer include a combination of propylene homopolymer and (propylene-ethylene) copolymer; a combination of propylene homopolymer and (propylene-ethylene-1-butene) copolymer; a combination of propylene homopolymer and (propylene-ethylene-1-hexene) copolymer; a combination of propylene homopolymer and (propylene-ethylene-1-octene) copolymer; a combination of propylene homopolymer and (propylene-1-butene) copolymer; a combination of propylene homopolymer and (propylene-1-hexene) copolymer; a combination of propylene homopolymer and (propylene-1-octene) copolymer; and a combination of propylene homopolymer and (propylene-1-decene) copolymer.

The heterophasic propylene polymer material may be a combination in which the polymer (I) is a polymer including a propylene unit and a monomer unit other than the propylene unit. Specific examples of the heterophasic propylene polymer material, in which the polymer (I) is followed by the polymer (II), include a combination of (propylene-ethylene) copolymer and (propylene-ethylene) copolymer; a combination of (propylene-ethylene) copolymer and (propylene-ethylene-1-butene) copolymer; a combination of (propylene-ethylene) copolymer and (propylene-ethylene-1-hexene) copolymer; a combination of (propylene-ethylene) copolymer and (propylene-ethylene-1-octene) copolymer; a combination of (propylene-ethylene) copolymer and (propylene-ethylene-1-decene) copolymer; a combination of (propylene-ethylene) copolymer and (propylene-1-butene) copolymer; a combination of (propylene-ethylene) copolymer and (propylene-1-hexene) copolymer; a combination of (propylene-ethylene) copolymer and (propylene-1-octene) copolymer; a combination of (propylene-ethylene) copolymer and (propylene-1-decene) copolymer; a combination of (propylene-1-butene) copolymer and (propylene-ethylene) copolymer; a combination of (propylene-1-butene) copolymer and (propylene-ethylene-1-butene) copolymer; a combination of (propylene-1-butene) copolymer and (propylene-ethylene-1-hexene) copolymer; a combination of (propylene-1-butene) copolymer and (propylene-ethylene-1-octene) copolymer; a combination of (propylene-1-butene) copolymer and (propylene-ethylene-1-decene) copolymer; a combination of (propylene-1-butene) copolymer and (propylene-1-butene) copolymer; a combination of (propylene-1-butene) copolymer and (propylene-1-hexene) copolymer; a combination of (propylene-1-butene) copolymer and (propylene-1-octene) copolymer; a combination of (propylene-1-butene) copolymer and (propylene-1-decene) copolymer; a combination of (propylene-1-hexene) copolymer and (propylene-1-hexene) copolymer; a combination of (propylene-1-hexene) copolymer and (propylene-1-octene) copolymer; a combination of (propylene-1-hexene) copolymer and (propylene-1-decene) copolymer; a combination of (propylene-1-octene) copolymer and (propylene-1-octene) copolymer; and a combination of (propylene-1-octene) copolymer and (propylene-1-decene) copolymer.

The component (A-1) heterophasic propylene polymer material that may be contained in the propylene-based resin composition of this embodiment is preferably a combination of propylene homopolymer and (propylene-ethylene)

copolymer, a combination of propylene homopolymer and (propylene-ethylene-1-butene) copolymer, a combination of (propylene-ethylene) copolymer and (propylene-ethylene) copolymer, a combination of (propylene-ethylene) copolymer and (propylene-ethylene-1-butene) copolymer, or a combination of (propylene-1-butene) copolymer and (propylene-1-butene) copolymer, more preferably a combination of propylene homopolymer and (propylene-ethylene) copolymer.

The heterophasic propylene polymer material can be produced by multi-step polymerization including the upstream polymerization step of preparing the polymer (I) and the polymerization step of preparing the polymer (II) in the presence of the polymer (I) prepared in the upstream polymerization step. The polymerization can be performed by using a catalyst system illustrated as a catalyst that can be used to produce the propylene-based polymer.

The limiting viscosity number of the polymer (I) (P part) (hereinafter referred to as [η]I) is preferably 0.1 to 5 dL/g, more preferably 0.5 to 5 dL/g, still more preferably 0.7 to 4 dL/g.

The limiting viscosity number of the polymer (II) (EP part) (hereinafter referred to as [η]II) is preferably 1 to 10 dL/g, more preferably 2 to 10 dL/g, still more preferably 2.5 to 8 dL/g.

The ratio ([n]II/[n]I) of [η]II to [n]I is preferably 0.5 to 20, more preferably 0.8 to 10, still more preferably 0.9 to 9.

When the propylene-based polymer is a polymer material composed of the polymer (I) and the polymer (II) formed by multi-step polymerization, the limiting viscosity number of the polymer formed in the upstream polymerization is determined from part of the polymer taken out of the polymerization tank for the upstream polymerization, and the limiting viscosity number (hereinafter referred to as [η]Total) of the polymer material finally formed in multi-step polymerization is determined. The limiting viscosity number of the polymer formed in the downstream polymerization is calculated by using these limiting viscosity numbers and the content of each polymer.

When the polymer material composed of the polymer (I) and the polymer (II) is a material including the polymer (I) prepared in the upstream polymerization step and the polymer (II) prepared in the downstream polymerization step, the content of each of the polymer (I) and the polymer (II) and the limiting viscosity numbers ([η]Total, [η]I, [η]II) are measured and calculated in the following procedures.

The limiting viscosity number [η]II of the polymer (II) is calculated from the following formula with the limiting viscosity number ([η]I) of the polymer (I) prepared in the upstream polymerization step, the limiting viscosity number ([η]Total) of the final polymer (i.e., a polymer composed of the polymer (I) and the polymer (II)) after the downstream polymerization step measured by the method described above, and the content of the polymer (II) contained in the final polymer.

$$[\eta]II = ([\eta]Total - [\eta]I \times XI)/XII$$

[η] Total: the limiting viscosity number of the final polymer (unit: dL/g)
[η] I: the limiting viscosity number of the polymer (I) (unit: dL/g)
XI: the mass ratio of the polymer (I) to the final polymer
XII: the mass ratio of the polymer (II) to the final polymer
XI and XII are obtained from the mass balance in the polymerization.

The mass ratio XII of the polymer (II) to the final polymer may be calculated from the following formula using the heat of crystal fusion of each of the polymer (I) and the final polymer.

$$XII = 1 - (\Delta Hf)T/(\Delta Hf)P$$

(ΔHf) T: the heat of fusion of the final polymer (the polymer (I) and the polymer (II)) (unit: cal/g)
(ΔHf) P: the heat of fusion of the polymer (I) (unit: cal/g)

The molecular weight distribution (Mw/Mn) of the polymer (I) measured by GPC is preferably 1 or more and less than 10, more preferably 2 or more and less than 7, still more preferably 3 or more and less than 5.

The content of the propylene-based polymer in the propylene-based resin composition of this embodiment relative to the total mass (100 mass%) of the propylene-based resin composition is preferably 30 mass% or more, more preferably 35 mass% or more, still more preferably 40 mass% or more, and preferably 70 mass% or less, preferably 30 to 70 mass%.

(2) Component (B): Inorganic Filler

The propylene-based resin composition of this embodiment may contain a component (B) inorganic filler. The propylene-based resin composition may contain only one inorganic filler or may contain two or more inorganic fillers.

Examples of the inorganic filler include glass, silicate minerals (e.g., talc), silicon dioxide (e.g., silica), titanium oxide, iron oxide, aluminum oxide (e.g., alumina), magnesium oxide, antimony oxide, barium ferrite, strontium ferrite, beryllium oxide, magnesium hydroxide, aluminum hydroxide, basic magnesium carbonate, calcium carbonate, magnesium carbonate, carbonate minerals, calcium sulfate, magnesium sulfate, basic magnesium sulfate, calcium sulfite, and cadmium sulfide.

The shape or the like of the inorganic filler is not limited. The inorganic filler may be platy, needle-like, or fibrous.

To improve the rigidity, impact resistance, and dimensional stability of a molded body molded from the propylene-based resin composition, the propylene-based resin composition preferably contains talc, which is a platy silicate mineral, as an inorganic filler. For example, commercial MWUPN-TT-H (available from Hayashi Kasei Co., Ltd.) can be used as talc.

The content of the inorganic filler in the propylene-based resin composition, relative to the total mass (100 mass%) of the propylene-based resin composition, is preferably 0.01 to 50 mass%, more preferably 0.03 mass% to 30 mass%.

When the propylene-based resin composition contains talc as an inorganic filler, the content of talc in the propylene-based resin composition, relative to the propylene-based resin composition, is preferably 0.01 to 50 mass%, more preferably 0.03 to 45 mass%, still more preferably 1 mass% to 40 mass%, particularly preferably 3 mass% to 30 mass%.

(3) Component (C): Hindered Amine Light Stabilizer

The propylene-based resin composition of this embodiment may contain a component (C) hindered amine light stabilizer. The hindered amine light stabilizer that may be used has a function of capturing radicals generated by light (UV) irradiation or preventing degradation caused by decomposition of hydrogen peroxide in the propylene-based resin composition (molded body). The component (C) hindered amine light stabilizer may be a high-molecular weight hindered amine light stabilizer or a low-molecular weight hindered amine light stabilizer.

Examples of the hindered amine light stabilizer include

(1) bis(2,2,6,6-tetramethyl-4-piperidyl) sebacate,
(2) a mixture containing bis(1,2,2,6,6-pentamethyl-4-piperidyl) sebacate and methyl 1,2,2,6,6-pentamethyl-4-piperidyl sebacate,
(3) bis(1,2,2,6,6-pentamethyl-4-piperidyl)[[3,5-bis(1,1-dimethylethyl)-4-hydroxyphenyl]methyl]butylmalonate,
(4) a reaction product between decanedioic acid bis(2,2,6,6-tetramethyl-1(octyloxy)-4-piperidyl) ester, 1,1-dimethylethyl hydroperoxide, and octane
(5) 4-benzoyloxy-2,2,6,6-tetramethylpiperidine,
(6) an ester mixture of 2,2,6,6-tetramethyl-4-piperidinol and a higher fatty acid,
(7) tetrakis(2,2,6,6-tetramethyl-4-piperidyl)-1,2,3,4-butanetetracarboxylate,
(8) tetrakis(1,2,2,6,6-pentamethyl-4-piperidyl)-1,2,3,4-butanetetracarboxylate,
(9) a polycondensation product of dimethyl succinate and 4-hydroxy-2,2,6,6-tetramethyl-1-piperidineethanol,
(10) poly[{(6-(1,1,3,3-tetramethylbutyl)amino-1,3,5-triazin-2,4-diyl) {(2,2,6,6-tetramethyl-4-piperidyl)imino}hexamethylene {(2,2,6,6-tetramethyl-4-piperidyl)imino}}],
(11) a polycondensation product of dibutylamine/1,3,5-triazine/N,N'-bis(2,2,6,6-tetramethyl-4-piperidyl-1,6-hexamethylenediamine and N-(2,2,6,6-tetramethyl-4-piperidyl)butylamine,
(12) N,N',N'',N'''-tetrakis-(4,6-bis-(butyl-(N-methyl-2,2,6,6-tetramethylpiperidin-4-yl)amino)-triazin-2-yl)-4,7-diazadecane-1,10-diamine,
(13) mixed {1,2,2,6,6-pentamethyl-4-piperidyl/P, P, P ', P '-tetramethyl-3,9-[2,4,8,10-tetraoxaspiro(5,5)undecane]dimethyl}-1,2,3,4 butanetetracarboxylate,
(14) N-(2,2,6,6-tetramethyl-4-piperidyl)maleimide,
(15) bis(1-undecaneoxy-2,2,6,6-tetramethylpiperidin-4-yl) carbonate,
(16) 2,2,6,6-tetramethylpiperidin-4-yl hexadecanoate,
(17) 2,2,6,6-tetramethylpiperidin-4-yl octadecanoate, and
a copolymer made up of an α-olefin having 20 to 24 carbon atoms. These hindered amine light stabilizers may be used singly or in combination of two or more.

To provide the resin composition (molded body) with high photostability, the hindered amine light stabilizer is preferably

(1) bis(2,2,6,6-tetramethyl-4-piperidyl) sebacate,
(4) a reaction product between decanedioic acid bis(2,2,6,6-tetramethyl-1(octyloxy)-4-piperidyl) ester, 1,1-dimethylethyl hydroperoxide, and octane,

(7) tetrakis(2,2,6,6-tetramethyl-4-piperidyl)-1,2,3,4-butanetetracarboxylate,
(8) tetrakis(1,2,2,6,6-pentamethyl-4-piperidyl)-1,2,3,4-butanetetracarboxylate,
(9) a polycondensation product of dimethyl succinate and 4-hydroxy-2,2,6,6-tetramethyl-1-piperidineethanol,
(10) poly[{(6-(1,1,3,3-tetramethylbutyl)amino-1,3,5-triazin-2,4-diyl) {(2,2,6,6-tetramethyl-4-piperidyl)imino}hexamethylene {(2,2,6,6-tetramethyl-4-piperidyl)imino}}], or
(14) a copolymer made up of N-(2,2,6,6-tetramethyl-4-piperidyl)maleimide and an α-olefin having 20 to 24 carbon atoms.

The component (C) hindered amine light stabilizer is more preferably a component (C-1) bis(2,2,6,6-tetramethyl-4-piperidyl) sebacate (e.g., ADEKASTAB LA-77 (available from ADEKA Corporation)) represented by formula below; a component (C-2) sterically hindered amine oligomer "a copolymer made up of N-(2,2,6,6-tetramethyl-4-piperidyl)maleimide and an α-olefin having 20 to 24 carbon atoms (e.g., UVINUL (registered trademark) 5050H (available from BASF Japan))" represented by formula below; or a component (C-3) butanedioc acid, dimethylester, polymer with 4-hydroxy-2,2,6,6-tetramethyl-1-piperidine ethanol, CAS.65447-77-0, (e.g., TINUVIN 622 SF (available from BASF)) .

[Chem. 1]

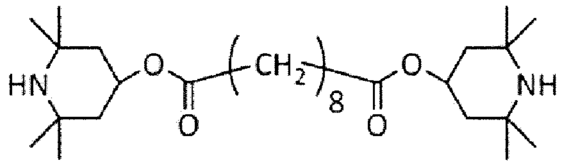

[Chem. 2]

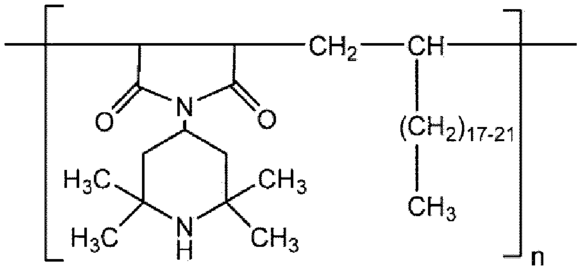

The content of the component (C) hindered amine light stabilizer in the propylene-based resin composition of this embodiment, relative to the total mass (100 parts by mass) of the component (A) propylene-based polymer and the component (B) inorganic filler contained in the propylene-based resin composition, is preferably 1 part by mass or less, more preferably 0.5 parts by mass or less, and normally more than 0 parts by mass, preferably 0.001 parts by mass or more, more preferably 0.01 parts by mass or more, still more preferably 0.03 parts by mass or more.
The presence of the hindered amine light stabilizer in an amount less than or equal to the upper limit results in effective reduction in the odor from a molded body molded from the propylene-based resin composition and effective improvement in the thermal stability of the molded body.

(4) Component (D): Olefin-Based Polymer

The propylene-based resin composition of this embodiment may contain a component (D) olefin-based polymer.
The olefin-based polymer is, for example, an olefin copolymer including an ethylene unit and an α-olefin unit having 4 or more carbon atoms. Hereinafter, the olefin copolymer including an ethylene unit and an α-olefin unit having 4 or more carbon atoms is also referred to as an ethylene-α-olefin copolymer.
The propylene-based resin composition preferably contains an ethylene-α-olefin copolymer as the component (D) olefin-based polymer. The propylene-based resin composition may contain only one ethylene-α-olefin copolymer or may contain two or more ethylene-α-olefin copolymers.
The content of the ethylene-α-olefin copolymer in the propylene-based resin composition is preferably 0 to 40 mass%, more preferably 0 to 30 mass% relative to the total mass (100 mass%) of the propylene-based resin composition.
The content of the ethylene unit and the α-olefin unit having 4 or more carbon atoms in the ethylene-α-olefin copolymer, relative to the total mass of the ethylene-α-olefin copolymer, is preferably 95 mass% or more, more preferably

98 mass% or more, still more preferably 99 mass% or more, and normally 100 mass% or less, and may be 100 mass%.

Examples of the α-olefin having 4 or more carbon atoms that may constitute the ethylene-α-olefin copolymer include α-olefins having 4 to 12 carbon atoms (e.g., 1-butene, 1-pentene, 1-hexene, 4-methyl-1-pentene, 1-octene, and 1-decene). The α-olefin having 4 or more carbon atoms that may constitute the ethylene-α-olefin copolymer is preferably 1-butene, 1-hexene, or 1-octene. The α-olefin having 4 or more carbon atoms may be an α-olefin (e.g., vinylcyclopropane, vinylcyclobutane) having a cyclic structure and having 4 or more carbon atoms.

The ethylene-α-olefin copolymer is preferably at least one polymer selected from the group consisting of ethylene-1-butene copolymer, ethylene-1-hexene copolymer, ethylene-1-octene copolymer, ethylene-1-decene copolymer, ethylene-(3-methyl-1-butene) copolymer, and a copolymer of ethylene and an α-olefin having a cyclic structure. The ethylene-α-olefin copolymer is more preferably the component (D-1) ethylene-1-butene copolymer.

The content of the α-olefin unit having 4 or more carbon atoms in the ethylene-α-olefin copolymer, relative to the total mass of the ethylene-α-olefin copolymer, is preferably 1 to 49 mass%, more preferably 5 to 49 mass%, still more preferably 24 to 49 mass%.

The melt flow rate (MFR) of the ethylene-α-olefin copolymer measured at 190°C under a load of 2.16 kgf in accordance with JIS K7210-1:2014 and K7210-2:2014 is preferably 0.1 g/10 min to 80 g/10 min.

To improve the impact resistance of a molded body molded from the propylene-based resin composition, the density of the ethylene-α-olefin copolymer is preferably 0.850 to 0.890 g/cm$^3$, more preferably 0.850 to 0.880 g/cm$^3$, still more preferably 0.855 to 0.870 g/cm$^3$.

The ethylene-α-olefin copolymer can be produced by, for example, polymerizing ethylene and an α-olefin having 4 or more carbon atoms using a polymerization catalyst. Examples of the polymerization catalyst include the polymerization catalysts illustrated as the polymerization catalysts for producing the propylene-based polymer described above.

The component (D) ethylene-α-olefin copolymer may be a commercial product. Examples of the commercial product include "ENGAGE (registered trademark) 7447" available from Dow Chemical Japan Ltd., which is ethylene-butene-1 copolymer; "TAFMER (registered trademark)" available from Mitsui Chemicals, Inc.; "NEO-ZEX (registered trademark)" and "ULT-ZEX (registered trademark)" available from Prime Polymer Co., Ltd.; and "EXCELLEN FX (registered trademark)", "SUMIKATHENE (registered trademark)", and "ESPRENE SPO (registered trademark)" available from Sumitomo Chemical Co., Ltd.

(5) Component: (E): Metal-Based Additive

The propylene-based resin composition of this embodiment may contain a component (E) metal-based additive. The component (E) metal-based additive is preferably at least one compound selected from the group consisting of fatty acid zinc salts and fatty acid aluminum salts. The presence of the component (E) metal-based additive in the propylene-based resin composition results in effective reduction in the odor from a molded body molded from the propylene-based resin composition and effective improvement in the thermal stability of the molded body.

The propylene-based resin composition of this embodiment may contain, as the component (E) metal-based additive, only one fatty acid zinc salt, or two or more fatty acid zinc salts.

The propylene-based resin composition of this embodiment may contain, as the component (E) metal-based additive, only one fatty acid aluminum salt, or two or more fatty acid aluminum salts.

A fatty acid is a compound represented by R-COOH. In the formula, R represents a monovalent aliphatic hydrocarbon group.

The monovalent aliphatic hydrocarbon group represented by R may be linear or branched, preferably linear.

The monovalent aliphatic hydrocarbon group represented by R may or may not have a carbon-carbon unsaturated bond, preferably has no carbon-carbon unsaturated bond.

Examples of the carbon-carbon unsaturated bond that the monovalent aliphatic hydrocarbon group represented by R may have include a carbon-carbon double bond and a carbon-carbon triple bond. The carbon-carbon unsaturated bond is preferably a carbon-carbon double bond.

The number of carbon atoms of the fatty acid in the fatty acid salt, which is the component (E) metal-based additive, is preferably 10 or more, more preferably 11 or more, and preferably 20 or less, more preferably 18 or less.

The fatty acid zinc salt, which is the component (E) metal-based additive, may be mono(fatty acid) zinc salt or di(fatty acid) zinc salt. The fatty acid zinc salt is preferably di(fatty acid) zinc salt.

The fatty acid aluminum salt, which is the component (E) metal-based additive, may be a mono(fatty acid) aluminum salt, a di(fatty acid) aluminum salt, or a tri(fatty acid) aluminum salt. The fatty acid aluminum salt is preferably a di(fatty acid) aluminum salt.

The propylene-based resin composition of this embodiment may contain a fatty acid calcium salt as the component (E) metal-based additive.

The fatty acid calcium salt, which is the component (E) metal-based additive may be a mono(fatty acid) calcium salt or a di(fatty acid) calcium salt. The fatty acid calcium salt is preferably a di(fatty acid) calcium salt.

Examples of the fatty acid zinc salt, which is the component (E) metal-based additive, include fatty acid zinc where zinc is bonded to monovalent fatty acids, such as lauric acid, stearic acid, palmitic acid, and linoleic acid, or polyvalent fatty acids, such as oleic acid and linoleic acid. These fatty acids may include a saturated or unsaturated functional group and/or a cyclic structure and may further include a hydroxy group or other groups.

Examples of the fatty acid aluminum salt, which is the component (E) metal-based additive, include fatty acid aluminum where aluminum is bonded to monovalent fatty acids, such as lauric acid, stearic acid, palmitic acid, and linoleic acid, or polyvalent fatty acids, such as oleic acid and linoleic acid. These fatty acids may include a saturated or unsaturated functional group and/or a cyclic structure and may further include a hydroxy group or other groups.

Examples of the fatty acid calcium salt, which is the component (E) metal-based additive, include fatty acid calcium where calcium is bonded to monovalent fatty acids, such as lauric acid, stearic acid, palmitic acid, and linoleic acid, or polyvalent fatty acids, such as oleic acid and linoleic acid. These fatty acids may include a saturated or unsaturated functional group and/or a cyclic structure and may further include a hydroxy group or other groups.

The propylene-based resin composition of this embodiment may contain calcium hydroxide as the component (E) metal-based additive.

When the propylene-based resin composition of this embodiment contains two or more compounds as the component (E) metal-based additive, the propylene-based resin composition of this embodiment preferably contains zinc distearate and aluminum distearate, more preferably contains calcium hydroxide in addition to zinc distearate and aluminum distearate.

When the propylene-based resin composition contains the component (E) metal-based additive, the content of the component (E) metal-based additive in the propylene-based resin composition, relative to the total mass (100 parts by mass) of the propylene-based polymer and the inorganic filler contained in the propylene-based resin composition, is normally 0 parts by mass or more, preferably 0.01 parts by mass or more, preferably 0.04 parts by mass or more, more preferably 0.1 parts by mass or more, and preferably 10 parts by mass or less, more preferably 3 parts by mass or less, still more preferably 1 part by mass or less, particularly preferably 0.6 parts by mass or less. The presence of the metal-based additive in an amount greater than or equal to the lower limit results in effective reduction in the odor from a molded body molded from the propylene-based resin composition and effective improvement in the thermal stability of the molded body.

(6) Component (F): Lubricant

The propylene-based resin composition of this embodiment may contain a component (F) lubricant. The component (F) lubricant may be any suitable known lubricant.

Specific examples of the component (F) lubricant include ethylene bis(stearamide) (e.g., ALFLOW H-50S (available from NOF Corporation)), erucamide, behenamide, and oleamide.

When the propylene-based resin composition of this embodiment contains the component (F) lubricant, the content of the component (F) lubricant in the propylene-based resin composition, relative to the total mass (100 parts by mass) of the propylene-based polymer and the inorganic filler contained in the propylene-based resin composition, is normally 0 parts by mass or more, preferably 0.001 parts by mass or more, more preferably 0.01 parts by mass or more, and preferably 5 parts by mass or less, more preferably 0.5 parts by mass or less, still more preferably 0.1 parts by mass. The presence of such a content of the component (F) lubricant results in effective reduction in the odor from a molded body molded from the propylene-based resin composition and effective improvement in the thermal stability of the molded body.

(7) Component (G): Antioxidant

The propylene-based resin composition of this embodiment may contain a component (G) antioxidant. The component (G) antioxidant may be any suitable known antioxidant.

Specific examples of the component (G) antioxidant include phenolic antioxidants (e.g., Sumilizer GA 80 (available from Sumitomo Chemical Co., Ltd.)), sulfurcontaining antioxidants (e.g., Sumilizer TPM (available from Sumitomo Chemical Co., Ltd.)), and phosphoruscontaining antioxidants (e.g., SONGNOX 6260 (available from Songwon Industrial Co., Ltd.)).

When the propylene-based resin composition of this embodiment contains the component (G) antioxidant, the content of the component (G) antioxidant in the propylene-based resin composition, relative to the total mass (100 parts by mass) of the propylene-based polymer and the inorganic filler contained in the propylene-based resin composition, is normally 0 parts by mass or more, preferably 0.01 parts by mass or more, more preferably 0.03 parts by mass or more, and preferably 1 part by mass or less, more preferably 0.5 parts by mass or less. The presence of such a content of the component (G) antioxidant results in effective reduction in the odor from a molded body molded from the propylene-based resin composition and effective improvement in the thermal stability of the molded body.

The propylene-based resin composition of this embodiment may contain a component (H) UV absorber. The component (H) UV absorber may be any suitable known UV absorber.

Specific examples of the component (H) UV absorber include benzoate UV absorbers (e.g., Sumisorb 400), and phenolic UV absorbers (e.g., Kemisorb 114 (available from Chemipro Kasei Kaisha, Ltd)).

When the propylene-based resin composition of this embodiment contains the component (H) UV absorber, the content of the component (H) UV absorber in the propylene-based resin composition, relative to the total mass (100 parts by mass) of the propylene-based polymer and the inorganic filler contained in the propylene-based resin composition, is normally 0 parts by mass or more, preferably 0.01 parts by mass or more, more preferably 0.03 parts by mass or more, and preferably 0.3 parts by mass or less, more preferably 0.2 parts by mass or less, still more preferably 0.1 parts by mass or less. The presence of such a content of the component (H) UV absorber results in effective reduction in the odor from a molded body molded from the propylene-based resin composition and effective improvement in the thermal stability of the molded body.

(8) Optional Components

The propylene-based resin composition of this embodiment may contain any suitable known optional components in addition to the components (A) to (H) described above.

Examples of the optional components that the propylene-based resin composition of this embodiment may contain include modifiers, pigments (e.g., carbon black) such as inorganic pigments and organic pigments, pigment dispersants, neutralizers, weathering agents, nucleating agents, antistatic agents, anti-blocking agents, processing aids, organic peroxides, foaming agents, foam nucleating agents, plasticizers, flame retardants, cross-linking agents, cross-linking aids, brightening agents, antibacterial agents, adsorbents, deodorants, fluidity and impact resistance improvers using cross-linking, and light diffusers.

The propylene-based resin composition may contain only one of the above optional components or may contain two or more of the above optional components.

2. Physical Properties and Other Characteristics of Propylene-Based Resin Composition

(1) Amine Compounds and Quantitative Determination of Amine Compounds (unit: mass ppm)

A volatile gas generated when a molded body formed by injection-molding the propylene-based resin composition of this embodiment under the following molding conditions X is heated at 100°C for 15 minutes contains amine compounds. The amine compound concentration is 3 to 40 mass ppm.

Molding conditions X: molten resin temperature 200°C, mold temperature 40°C, filling pressure 15 MPa, holding pressure 4.3 MPa, holding pressure time 40 sec, molded body ejection temperature ≤ 60°C, and total cycle time 60 sec.

In this embodiment, the amine compounds contained in the volatile gas generated when the molded body formed by injection-molding the propylene-based resin composition under the above conditions is heated at 100°C for 15 minutes contain N (m/z = 14) and NH (m/z = 15) as constituents as measured by gas chromatograph-mass spectrometry (GC-MS).

Examples of the amine compounds include propan-2-amine, tert-butylamine, 2-methylpropan-2-amine, tert-butyl(methyl)-14-azane, 2-methylbutan-2-amine, N,2-dimethylpropan-2-amine, 2-methylpentan-2-amine, N,2,6-trimethylheptan-2-amine, N-isopropyl-2-methylpentan-2-amine, N,2,6-trimethylheptan-2-amine, 2,2,6,6-tetramethylpiperidine, 1,2,2,6,6-pentamethylpiperidine, 2,2,6,6-tetramethylpiperidin-4-ol, 1,2,2,6,6-pentamethylpiperidin-4-amine, 1,2,2,6,6-pentamethylpiperidin-4-ol, 2,2,6,6-tetramethylpiperidin-4-amine, N-(1,2,2,6,6-pentamethylpiperidin-4-yl)formamide, (E)-4-hydroxy-N-(2,2,6,6-tetramethylpiperidin-4-yl)but-2-enamide, N-(1,2,2,6,6-pentamethylpiperidin-4-yl)acrylamide, (E)-4-oxo-4-((1,2,2,6,6-pentamethylpiperidin-4-yl)amino)but-2-enoic acid, and (E)-4-oxo-4-((2,2,6,6-tetramethylpiperidin-4-yl)amino)but-2-enoic acid.

The amine compounds can be quantitatively determined by using any suitable known device, that is, a gas chromatograph mass spectrometer (GC-MS) (e.g., GC-2010 (available from Shimadzu Corporation)) including a mass spectrometer (MS) as a detector.

Specifically, a molded body molded from the propylene-based resin composition of this embodiment is cut into a predetermined shape to prepare cut pieces. The cut pieces are used as samples to quantitatively determine the amine compounds containing N (m/z = 14) and NH (m/z = 15) as constituents.

In the propylene-based resin composition according to this embodiment and the molded body molded from the propylene-based resin composition, the content of the amine compounds is preferably 3 to 40 mass ppm, more preferably 3 to 30 mass ppm, still more preferably 5 to 30 mass ppm, yet still more preferably 5 to 20 mass ppm, yet still more preferably 5 to 12 mass ppm.

The presence of the above content of the amine compounds in the propylene-based resin composition of this

embodiment results in effective reduction in the odor from a molded body molded from the propylene-based resin composition and effective improvement in the thermal stability of the molded body.

A propylene-based resin composition that can be injection-molded under the above conditions into a molded body that emits a volatile gas having an amine compound concentration of 3 to 40 mass ppm when heated at 100°C for 15 minutes can be produced by, for example, adding the above amount of (E) a metal-based additive to a propylene-based resin composition containing (A) a propylene-based polymer, (B) an inorganic filler, and (C) a hindered amine light stabilizer. The amine compound concentration can be adjusted to 3 to 40 mass ppm by controlling the content of (C) the hindered amine light stabilizer. The content of (C) the hindered amine light stabilizer in the resin composition is preferably as described above.

To further improve processability in molding the propylene-based resin composition, the melt flow rate (MFR) of the propylene-based resin composition of this embodiment measured at 230°C under a load of 2.16 kgf in accordance with JIS K7210-1:2014 and K7210-2:2014 is preferably 1 g/10 min or more. The melt flow rate (MFR) is more preferably 5 g/10 min or more, still more preferably 10 g/10 min or more, particularly preferably 15 g/10 min or more.

3. Method for Producing Propylene-Based Resin Composition

The propylene-based resin composition of this embodiment can be produced (prepared) by any suitable known production method using the components described above.

The propylene-based resin composition of this embodiment can be produced by, for example, melt-kneading the components to be contained in the propylene-based resin composition. The temperature of melt kneading can be, for example, 180°C or higher, and may be, for example, 180°C to 300°C, or 180°C to 250°C.

Examples of devices for producing the propylene-based resin composition of this embodiment by melt kneading include Banbury mixers, single-screw extruders, and twin-screw extruders (e.g., co-rotating twin-screw extruders).

The adding order of the components to be contained in the propylene-based resin composition of this embodiment is not limited.

The produced propylene-based resin composition may have any suitable known size and shape, such as a strand, a sheet, a plate, or pellets.

To improve processability and stability in producing a molded body containing the propylene-based resin composition, the propylene-based resin composition is preferably in the form of pellets with a length of 1 to 50 mm.

4. Method for Producing Molded Body

The method for producing a molded body containing the propylene-based resin composition of this embodiment is not limited. Suitable examples of the method for producing a molded body containing the propylene-based resin composition of this embodiment include any suitable known injection molding method. Specific examples of the injection molding method include an injection foam molding method, a supercritical injection foam molding method, an ultra-high speed injection molding method, an injection compression molding method, a gas-assisted injection molding method, a sandwich molding method, a sandwich foam molding method, and an insert-outsert molding method. A molded body containing the propylene-based resin composition of this embodiment may be suitably used in material recycling applications. The propylene-based resin composition can be produced by crushing or pulverizing the molded body containing the propylene-based resin composition of this embodiment, and then melt-kneading the pulverized material. The pulverized material may be mixed with another resin composition as needed when pulverized material is melt-kneaded. The propylene-based resin composition thus produced can be regarded as the propylene-based resin composition of this embodiment as long as the propylene-based resin composition satisfies the above conditions.

Examples of the method for producing the propylene-based resin composition in material recycling include the following method.

A method for producing the propylene-based resin composition including step (α) and step (β).

Step (α): a step of pulverizing a molded body containing the propylene-based resin composition of this embodiment to form a pulverized material,
Step (β): a step of melt-kneading the pulverized material to form the propylene-based resin composition.

In step (β), the pulverized material may be melt-kneaded with at least one selected from the group consisting of a propylene-based polymer, an inorganic filler, and a hindered amine light stabilizer. The method is adjusted as appropriate such that the produced propylene-based resin composition satisfies the above conditions.

Examples of the method for producing a molded body containing the olefin resin composition in material recycling include the following method.

A method for producing a molded body containing the propylene-based resin composition including step (α')

and step (β').

Step (α'): a step of pulverizing a molded body containing the propylene-based resin composition of this embodiment to form a pulverized material,
Step (β'): a step of molding the pulverized material into a molded body containing the propylene-based resin composition.

In step (β'), the pulverized material may be mixed with at least one selected from the group consisting of a propylene-based polymer, an inorganic filler, and a hindered amine light stabilizer before molding.

5. Applications of Propylene-Based Resin Composition and Molded Body Molded Therefrom

There is no limit to the application of the propylene-based resin composition of this embodiment and the molded body molded from the propylene-based resin composition. The propylene-based resin composition can be suitably used in various applications that require high thermal stability and less odor.
A molded body produced by molding the propylene-based resin composition of this embodiment may be suitably used as, for example, parts for automobiles, parts for home appliances, and containers. In particular, the propylene-based resin composition of this embodiment can be suitably used as a material of automotive interior parts that require high thermal stability and less odor (low odor). Specific examples of automotive interior parts include door trims, pillars, and instrument panels.

6. Properties of Molded Body Molded from Propylene-Based Resin Composition

(1) Evaluation of Thermal Stability

Thermal stability can be evaluated by using any suitable known thermogravimetry/differential thermal analyzer (e.g., TG/DTA 6200 (available from Seiko Instruments Inc.)).
Specifically, a test piece prepared by molding the propylene-based resin composition of this embodiment into a predetermined shape is used as a sample. The thermal stability can be evaluated on the basis of the oxidative induction time (unit: min), which is defined as the time to the onset of an exothermic peak of the oxidation of the test piece, as measured at set temperatures of 190°C and then 210°C.
In this embodiment, the oxidative induction time (min) at a set temperature of 190°C and the oxidative induction time (min) at a set temperature of 210°C are each preferably 10 (min) or longer, which can be rated good, more preferably 12 (min) or longer. The oxidative induction time (min) at a set temperature of 190°C is more preferably 120 (min) or longer.

(2) Evaluation of Odor

The odor of the molded body molded from the propylene-based resin composition can be evaluated by more than one panelist (examiner) scoring the odor on the basis of a predetermined scoring criteria.
Specifically, a test piece prepared by molding the propylene-based resin composition of this embodiment into a predetermined shape is used as a sample. The sample is placed in an odorless container (e.g., glass bottle) and sealed. The sample is heated, for example, under predetermined temperature conditions at 50°C or higher (e.g., heated at 80°C for 2 hours and then allowed to stand at 60°C) based on the temperatures inside automotive cabins in summer. The odor of the sample in the container is then scored, for example, on the basis of the scoring criteria described below, and the scores are summed up. The summed score is divided by the number of panelists to obtain the average score. The odor is objectively evaluated on the basis of the average score.

(Evaluation Criteria)

1 point: no odor
2 points: some odor, but not unpleasant
3 points: distinct odor, but not unpleasant yet
4 points: unpleasant odor
5 points: very unpleasant odor
6 points: intolerable odor

In the odor evaluation, the average score is preferably 3.2 points or less, more preferably 3.1 points or less, still more preferably 3.0 points or less.

In addition to the "odor evaluation", the odor quality can also be evaluated. With regard to odor quality, preferably, there is no unpleasant odors, such as burnt odors, amine odors, and acrylic odors. In particular, preferably, there are no burnt odors.

EXAMPLES

The present invention will be described below in detail by way of Examples and Comparative Examples. The present invention is not limited to Examples described below.

The components used in Examples and Comparative Examples will be described below.

1. Component (A): Propylene-Based Polymer

Component (A-1): Heterophasic Propylene Polymer Material

A component (A-1) heterophasic propylene polymer material was produced by a liquid phase-gas phase polymerization method using a polymerization catalyst obtained by the method described in Example 1 of JP-A-2004-182981. The component (A-1) heterophasic propylene polymer material was a propylene-based polymer containing 87 parts by mass of (a) a propylene homopolymer component, which is the polymer (I), and 13 parts by mass of an ethylene-propylene random copolymer component, which is the polymer (II) and (b) an ethylene-$\alpha$-olefin copolymer.

The physical properties of the component (A-1) heterophasic propylene polymer material are as described below.

Melt flow rate (230°C, load 2.16 kgf): 55 g/10 min

(a) Propylene homopolymer component (P part)
Limiting viscosity number: 0.90 dL/g
(b) Ethylene-propylene random copolymer component (EP part)

Limiting viscosity number: 6.0 dL/g
Content of structural unit derived from ethylene: 32 mass%

Component (A-2): Propylene Homopolymer

The component (A-2) propylene homopolymer was produced by a liquid phase-gas phase polymerization method using a polymerization catalyst obtained by the method described in Example 1 of JP-A-2004-182981.

The physical properties of the component (A-2) propylene homopolymer are as described below.

Melt flow rate (230°C, load 2.16 kgf): 3.2 g/10 min
Limiting viscosity number: 2.0 dL/g

The limiting viscosity number (unit: dL/g) is a value measured at a temperature of 135°C by the following method using tetralin as a solvent.

The limiting viscosity number (unit: dL/g) was determined by an "extrapolation method", in which the reduced viscosity was measured at different concentrations by using an Ubbelohde viscometer, and the reduced viscosity was plotted against concentration and extrapolated to zero.

More specifically, the limiting viscosity number was determined by measuring the reduced viscosity at three concentrations, 0.1 g/dL, 0.2 g/dL, and 0.5 g/dL, plotting the reduced viscosity against concentration, and extrapolating the reduced viscosity to zero concentration in accordance with the method described in "Polymer Solution, Polymer Experiment 11" (published by Kyoritsu Shuppan Co., Ltd., 1982), page 491.

2. Component (B): Inorganic Filler

Talc was used as the component (B) inorganic filler. The physical properties and other characteristics are as described below.

MWUPN-TT-H (available from Hayashi Kasei Co., Ltd.)
CAS No.14807-96-6

The average particle diameter (50% particle diameter): 4.7 um (measured by using a laser diffraction analyzer SALD 1100 (available from Shimadzu Corporation))

3. Component (C): Hindered Amine Light Stabilizer

Component (C-1): bis(2,2,6,6-tetramethyl-4-piperidyl) sebacate
CAS.52829-07-9

The component (C-1) bis(2,2,6,6-tetramethyl-4-piperidyl) sebacate represented by the following formula was used as the component (C) hindered amine light stabilizer. The physical properties and other characteristics are as described below.

[Chem. 3]

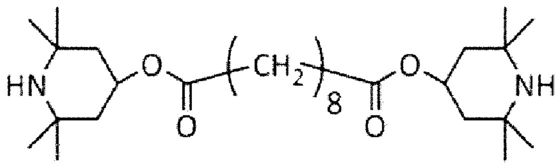

ADEKASTAB LA-77 (available from ADEKA Corporation)
molecular weight: 481

Component (C-2) sterically hindered amine oligomer "copolymer made up of N-(2,2,6,6-tetramethyl-4-piperidyl)maleimide and an $\alpha$-olefin having 20 to 24 carbon atoms"
CAS.152261-33-1

The copolymer represented by the following formula was used as the component (C-2). The physical properties and other characteristics are as described below.

[Chem. 4]

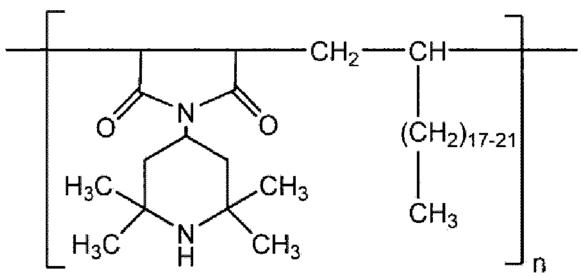

UVINUL (registered trademark) 5050 H (available from BASF Japan)
Molecular weight: 3500
pKa:7.0
Weight loss in TG-DTA: 2.2%

Component (C-3) butanedioc acid, dimethylester, polymer with 4-hydroxy-2,2,6,6-tetramethyl-1-piperidine ethanol
CAS.65447-77-0

The following product was used as the component (C-3). The physical properties and other characteristics are as described below.

TINUVIN 622 SF (available from BASF Japan)
Molecular weight: 3100 to 4000

4. Component (D): Olefin-Based Polymer

The component (D-1) ethylene-butene-1 copolymer was used as ethylene-α-olefin copolymer, which is the component (D) olefin-based polymer.

The physical properties and other characteristics of the component (D-1) ethylene-butene-1 copolymer are as described below.

ENGAGE (registered trademark) 7447 (available from Dow Chemicals)
Content of structural unit derived from ethylene: 70 mass%
Content of structural unit derived from butene-1: 30 mass%
Melt flow rate (190°C, load 2.16 kgf): 5 g/10 min
Density: 0.865 $g/cm^3$

5. Component (E): Metal-Based Additive (Fatty Acid Zinc Salt, Fatty Acid Aluminum Salt, Fatty Acid Calcium Salt, and Calcium Hydroxide)

(1) Aluminum distearate

Aluminum stearate (available from FUJIFILM Wako Pure Chemical Corporation)
CAS No.300-92-5

(2) Zinc distearate

Zinc stearate (available from Nitto Chemical Industry Co., Ltd.)
CAS No.557-05-1

(3) Calcium distearate

Calcium stearate (available from Sakai Chemical Industry Co.,Ltd.)
CAS No.1592-23-0

(4) Calcium hydroxide

Calcium hydroxide CLS-B (available from Shiraishi Calcium Kaisha)
CAS No.1305-62-0

Component (F): Lubricant

(1) Ethylene bis(stearamide)

ALFLOW H-50S (available from NOF Corporation)
CAS No.324-27431

Component (G): Antioxidant

(1) Sumilizer GA 80 (available from Sumitomo Chemical Co., Ltd.)
CAS.90498-90-1
(2) SONGNOX 6260 (available from Songwon Industrial Co., Ltd.)
CAS.26741-53-7
(3) Sumilizer TPM (available from Sumitomo Chemical Co., Ltd.)
CAS.16545-54-3
(4) IRGAFOS 168 (available from BASF)
CAS.31570-04-4

Component (H): UV absorber

Sumisorb 400 (available from Sumika Chemtex Company, Limited.)
CAS.4221-80-1

The molded body molded from the propylene-based resin composition was evaluated as described below.

1. Amine Compounds

The propylene-based resin composition was injection-molded into a plate-shaped molded body 60 mm long, 60 mm wide, and 2.0 mm thick by using M70 Injection Molding Machine available from MEIKI & Company., LTD under the following conditions: molten resin temperature 200°C, mold temperature 40°C, filling pressure 15 MPa, holding pressure 4.3 MPa, holding pressure time 40 s(sec), molded body ejection temperature ≤ 60°C, and total cycle time 60 s(sec). The obtained molded body was then cut into a cut piece 6 mm long, 6 mm wide, and 2.0 mm thick.

The "amine compounds" that contain N (m/z = 14) and NH (m/z = 15) as constituents and may cause odor were assigned by gas chromatograph-mass spectrometry (GC-MS) measurement in accordance with the following method using the cut piece prepared as described above.

In GC-MS measurement, a gas chromatograph GC-2010 (available from Shimadzu Corporation) was used as an analyzer, Rix-5 (packing material: 5% diphenyl polysiloxane/95% dimethyl polysiloxane, length 30 m, inner diameter 0.32 mm, thickness 1.0 um) as a column, and helium gas as a carrier gas.

In the measurement, 2.0 g of the cut piece prepared as described above was placed in a sample bottle (volume 20 mL), and the sample bottle was sealed. The sample bottle was heated at 100°C for 15 minutes, and the volatile components were injected into the injection port of the GC. The temperature of the injection port was 250°C. The column oven temperature was held at 40°C for 10 minutes, raised at 10°C/min, and further held at 290°C for 10 minutes. At this time, the flow rate was 1 mL/min, and the split ratio was 50:1.

In this measurement, a mass spectrometer (MS) was used as a detector, the electron impact ionization (EI) mode was used as an ionization mode, and the mass/charge ratio (m/z) was in the range of 30 to 500.

Selected ion monitoring (SIM) in which only a particular mass/charge ratio (m/z) was observed was used for the measurement.

The ion acceleration voltage and other parameters were set by auto-tuning using a perfluorotributylamine standard.

In Examples, the "amine compounds" were defined as components containing N and NH as constituents.

2. Quantitative Determination of Amine Compounds (unit: mass ppm)

The amine compounds were quantitatively determined by gas chromatography (GC) measurement in accordance with the following procedure.

Specifically, Gas Chromatography Flash GC Nose Heracles (available from Alpha MOS) was used as a device, Tenax TA (solid sorbent trap) was used as a trap, and MXT-5 (packing material: diphenyl dimethyl polysiloxane, length 10 m, inner diameter 0.18 mm, thickness 0.14 μm) was used as a column.

A hydrogen flame ionization detector (FID) was used as a detector, and hydrogen gas was used as a carrier gas.
To quantitively determine the amine compounds, 2.0 g of the cut piece prepared as described above was placed in a sample bottle (volume 20 mL), and the sample bottle was sealed. The sample bottle was heated at 100°C for 15 minutes, and the volatile components were injected into the injection port of the GC and cryo-trapped in the trap. The trap was heated so that the components were introduced into the GC column to quantitatively determine the generated amine compounds.
The GC measurement conditions were as follows: injection volume 5000 μL; injection port temperature 220°C; trap temperature 70°C; trap desorption temperature 240°C; and column oven temperature held at 40°C for 10 minutes, raised at 1.5°C/sec, and held at 250°C for 90 seconds. The split ratio was 10:1. The temperature of the FID was 260°C.
A standard (toluene), 1 μL, 5 μL, 10 μL, was weighed and placed in sample bottles. The same measurement as above was performed to make a calibration curve. The amine compounds were quantitatively determined by using the obtained calibration curve.

3. Evaluation of Thermal Stability (unit: min)

The propylene-based resin composition was molded into a plate-shaped molded body 90 mm long, 60 mm wide, and 3.0 mm thick by using SE130 injection molding machine available from Sumitomo Heavy Industries, Ltd at a molding temperature of 220°C, a mold cooling temperature of 50°C, and a pressure of 50 MPa.
The formed plate-shaped molded body was further pressed under vacuum into a size suitable for measurement to form a test piece.
In vacuum pressing, the molded body was pressed at a forming press temperature of 190°C at 0 MPa for 5 minutes and 1 MPa for 5 minutes, and then cooled at 25°C and 0 MPa for 5 minutes. As a result, a test piece with a thickness of 300 um was obtained.
Next, the oxidative induction time was measured at set temperatures of 190°C and then 210°C by using the obtained test piece and a thermogravimetry/differential thermal simultaneous analyzer (TG/DTA 6200 available from Seiko Instruments Inc.).
Specifically, nitrogen gas ($N_2$) was used as an atmosphere gas and readily heated to a set temperature, and the atmosphere gas was changed from nitrogen gas to air. The time from the change of the atmosphere gas to the onset of an exothermic peak of the oxidation of the test piece was defined as an oxidative induction time (unit: min), and the thermal stability was evaluated on the basis of the oxidative induction time.
The measurement time was maximum 2 hours. If no heat generation or weight loss was observed within the measurement time, the oxidative induction time was "120 minutes or longer".

4. Evaluation of Odor

The propylene-based resin composition was supplied to an injection molding machine ("M70 Injection Molding Machine" available from MEIKI & Company., LTD) and molded into a plate-shaped molded body 60 mm long, 60 mm wide, and 2.0 mm thick under the following conditions: molten resin temperature 200°C, mold temperature 40°C, filling pressure 15 MPa, holding pressure 4.3 MPa, holding pressure time 40 s(sec), molded body ejection temperature ≤ 60°C, and total cycle time 60 s(sec). The obtained plate-shaped molded body was then cut into cut pieces with a size 60 mm long, 30 mm wide, and 2.0 mm thick, and the cut pieces were used as samples.
The obtained samples (3 pieces) were placed in a 0.5 L odorless glass bottle, and the glass bottle was sealed with a lid and heated in an oven at 80°C for 2 hours.
The glass bottle was then allowed to stand at 60°C for 15 minutes. Next, the odor of the samples in the glass bottle was evaluated by three or more panelists.
Specifically, the odor was scored by each panelist on the basis of the scoring criteria described below.

(Evaluation Criteria)

1 point: no odor
2 points: some odor, but not unpleasant
3 points: distinct odor, but not unpleasant yet
4 points: unpleasant odor
5 points: very unpleasant odor
6 points: intolerable odor

The scores given by the panelists on the basis of the scoring criteria described above were summed up. The summed score was divided by the number of panelists to obtain the average score. The odor was evaluated on the basis of the average score. In addition, the odor quality was also evaluated.

[Example 1]

The following components were uniformly mixed: relative to the total mass (100 parts by mass) of the component (A) propylene-based polymer and the component (B) inorganic filler, 65 parts by mass of the component (A-1) propylene-ethylene block copolymer, 9 parts by mass of the component (A-2) propylene homopolymer, 25.9 parts by mass of the component (B) talc, 0.12 parts by mass of ADEKASTAB LA-77, which is the component (C) hindered amine light stabilizer, 20.5 parts by mass of the component (D) olefin-based polymer (component (D-1) ethylene-butene-1 copolymer), 1.2 parts by mass of zinc stearate, which is the component (E) metal-based additive, 0.48 parts by mass of calcium hydroxide, 0.024 parts by mass of calcium stearate, 0.084 parts by mass of ethylene bis(stearamide), which is the component (F) lubricant, 0.024 parts by mass of Sumilizer GA 80, which is the component (G) antioxidant, 0.06 parts by mass of SONGNOX 6260, 0.024 parts by mass of Sumilizer TPM, and 0.06 parts by mass of Sumisorb 400. The resulting mixture was then fed into a twin-screw kneader TEX44αII available from The Japan Steel Works, Ltd. through the raw material inlet on the most upstream side and melt-kneaded at a cylinder temperature of 200°C, a discharge rate of 50 kg/h, a screw rotation speed of 200 rpm, and a feed hopper oxygen level of 2% to prepare pellets of the propylene-based resin composition.

The feed hopper oxygen level was measured by inserting a sensor of a portable oxygen meter into a purge resin inlet of a feed hopper. An oxygen level of 2% was achieved by causing nitrogen gas to flow into the feed hopper.

Next, the pellets of the propylene-based resin composition were dried at 100°C for 1 hour and then molded into a molded body by using an injection molding machine as described above. The molded body was cut and further formed into a test piece. The amine decomposition rate, odor, thermal stability, and odor quality of the test piece were evaluated by the methods described above. The results were shown in Table 3.

[Examples 2 to 6]

The propylene-based resin compositions of Examples 2 to 6 were prepared in the same manner as in Example 1 described above except that the amounts of the components mixed were as shown in Tables 1 and 2 below, and evaluated in the same manner as in Example 1. The results were shown in Table 3.

[Comparative Examples 1 to 3]

The propylene-based resin compositions of Comparative Examples 1 to 3 were prepared in the same manner as in Example 1 described above except that the amounts of the components mixed were as shown in Tables 1 and 2 below, and evaluated in the same manner as in Example 1. The results were shown in Table 3.

[Table 1]

(Table 1)

| Component | Product name and other details | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| (A-1) | | 65 | 65 | 65 | 65 | 65 | 65 | 50 | 65 | 65 |
| (A-2) | | 9 | 9 | 9 | 9 | 9 | 9 | | 9 | 9 |
| (B) | MWUPN-TT-H (talc) | 25.9 | 25.9 | 25.9 | 25.9 | 25.9 | 25.9 | 50 | 25.9 | 25.9 |
| (C-1) | LA-77 | 0.12 | 0.12 | | | 0.12 | 0.12 | | 0.12 | 0.12 |
| (C-2) | UVINUL 5050H | | | 0.12 | | | | | | |
| (C-3) | TINUVIN 622SF | | | | 0.12 | | | | | |
| (D-1) | ENGAGE 7447 | 20.5 | 20.5 | 20.5 | 20.5 | 20.5 | 20.5 | | 20.5 | 20.5 |
| (E) | $ZnSt_2$ | 1.2 | | 1.2 | 1.2 | 0.5 | 1.2 | 1.0 | | 1.2 |
| (E) | $AlSt_2$ | | 1.2 | | | | | | | |
| (E) | $CaSt_2$ | 0.024 | 0.024 | 0.024 | 0.024 | 0.024 | 0.024 | | 0.024 | 0.506 |
| (F) | $Ca(OH)_2$ | 0.48 | 0.48 | 0.48 | 0.48 | 0.48 | 0.48 | | 0.48 | 0.48 |
| (F) | ALFLOW H-50S | 0.084 | 0.084 | 0.084 | 0.084 | 0.084 | 0.084 | | 0.084 | 0.084 |

[Table 2]

(Table 2)

| Component | Product name and other details | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| (G) | Irgafos 168 | | | | | | | 0.2 | | |
| (G) | Sumilizer GA 80 | 0.024 | 0.024 | 0.024 | 0.024 | 0.024 | 0.024 | | 0.024 | |
| (G) | SONGNOX 6260 | 0.06 | 0.06 | 0.06 | 0.06 | 0.06 | 0.06 | | 0.06 | 0.06 |
| (G) | Sumilizer TPM | 0.024 | 0.024 | 0.024 | 0.024 | 0.024 | 0.024 | | 0.024 | 0.024 |
| (H) | Sumisorb 400 | 0.06 | 0.06 | 0.06 | 0.06 | 0.06 | 0.06 | | 0.06 | 0.06 |

[Table 3]

(Table 3)

| Evaluation | Example 1 | Example 2 | Example 3 | Example 4 | Example 5 | Example 6 | Comparative Example 1 | Comparative Example 2 | Comparative Example 3 |
|---|---|---|---|---|---|---|---|---|---|
| Amine compound content (ppm) | 10.4 | 22.4 | 5.9 | 6.5 | 13.0 | 5.3 | 0.9 | 42.7 | 47.5 |
| Odor 6-point scale evaluation | 2.6 | 3.1 | 2.6 | 2.8 | 2.8 | 3.0 | 3.3 | 3.8 | 3.5 |
| Thermal stability 190°C (min) | 120 or longer | 120 or longer | 120 or longer | 120 or longer | - | 120 or longer | 3 | | |
| Thermal stability 210°C (min) | 16 | 23 | 22 | 50 | - | 12 | 0 | - | - |

## Claims

1. A propylene-based resin composition comprising:

(A) a propylene-based polymer;
(B) an inorganic filler; and
(C) a hindered amine light stabilizer,

wherein an amine compound concentration in a volatile gas generated when a molded body formed by molding the propylene-based resin composition under the following molding conditions X is heated at 100°C for 15 minutes is 3 to 40 mass ppm:
Molding conditions X: molten resin temperature 200°C, mold temperature 40°C, filling pressure 15 MPa, holding pressure 4.3 MPa, holding pressure time 40 sec, molded body ejection temperature $\leq$ 60°C, and total cycle time 60 sec.

2. The propylene-based resin composition according to claim 1, wherein the (B) inorganic filler is talc.

3. The propylene-based resin composition according to claim 1 or 2, wherein the (B) inorganic filler contains at least one selected from the group consisting of glass, calcium carbonate, and basic magnesium sulfate.

4. The propylene-based resin composition according to any one of claims 1 to 3, further comprising (D) an olefin-based polymer,
wherein the (D) olefin-based polymer is at least one polymer selected from the group consisting of ethylene-1-butene copolymer, ethylene-1-hexene copolymer, ethylene-1-octene copolymer, ethylene-1-decene copolymer, ethylene-(3-methyl-1-butene) copolymer, and a copolymer of ethylene and an $\alpha$-olefin having a cyclic structure.

5. The propylene-based resin composition according to any one of claims 1 to 4, wherein a content of the (C) hindered amine light stabilizer is 0.3 parts by mass or less when a total mass of the (A) propylene-based polymer and the (B) inorganic filler is 100 parts by mass.

6. The propylene-based resin composition according to any one of claims 1 to 5, wherein the (C) hindered amine light stabilizer is other than bis(2,2,6,6-tetramethyl-4-piperidyl) sebacate.

7. The propylene-based resin composition according to any one of claims 1 to 6, wherein an amine compound concentration in the volatile gas is 3 to 30 mass ppm.

8. The propylene-based resin composition according to any one of claims 1 to 7, further comprising (E) a metal-based additive,
wherein the (E) metal-based additive is at least one compound selected from the group consisting of fatty acid zinc salts and fatty acid aluminum salts.

9. The propylene-based resin composition according to claim 8, wherein the (E) metal-based additive is fatty acid zinc.

10. A molded body comprising the propylene-based resin composition according to any one of claims 1 to 9.

11. A method for producing a molded body containing the propylene-based resin composition according to claim 10, the method comprising step ($\alpha$') and step ($\beta$'):

Step ($\alpha$'): a step of pulverizing a molded body containing the propylene-based resin composition according to any one of claims 1 to 9 to form a pulverized material,
Step ($\beta$'): a step of molding the pulverized material into a molded body containing the propylene-based resin composition according to any one of claims 1 to 9.

## INTERNATIONAL SEARCH REPORT

International application No.
**PCT/JP2022/000345**

**A. CLASSIFICATION OF SUBJECT MATTER**

***C08K 5/098***(2006.01)i; ***C08K 5/17***(2006.01)i; ***C08K 5/3435***(2006.01)i; ***C08L 23/08***(2006.01)i; ***C08L 23/10***(2006.01)i; ***C08K 3/013***(2018.01)i; ***C08K 3/34***(2006.01)i
FI: C08L23/10; C08K3/013; C08K3/34; C08K5/3435; C08K5/17; C08L23/08; C08K5/098

According to International Patent Classification (IPC) or to both national classification and IPC

**B. FIELDS SEARCHED**

Minimum documentation searched (classification system followed by classification symbols)

C08L,C08K5,C08K3

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2000-136272 A (TOPPAN PRINTING CO LTD) 16 May 2000 (2000-05-16) claims, paragraphs [0010], [0014], [0023], [0026], example 1 | 1-11 |
| Y | WO 2020/129871 A1 (FUJIKURA LTD) 25 June 2020 (2020-06-25) claims, paragraphs [0021]-[0023] | 1-11 |
| Y | JP 2009-515622 A (SCA HYGIENE PRODUCTS AB) 16 April 2009 (2009-04-16) claims, paragraphs [0023], [0049] | 1-11 |
| Y | WO 2015/132267 A1 (ONTEX BVBA) 11 September 2015 (2015-09-11) claims, p. 5, line 34 to p. 6, line 15 | 1-11 |
| X | JP 2016-506437 A (BOREALIS AG) 03 March 2016 (2016-03-03) claims, paragraphs [0003], [0070], [0071], example IE2 | 1, 2, 5-7, 10 |
| Y | | 11 |
| Y | JP 2012-161282 A (SEKISUI FILM KK) 30 August 2012 (2012-08-30) paragraph [0008] | 1-11 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 March 2022** | **29 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/000345**

**C. DOCUMENTS CONSIDERED TO BE RELEVANT**

| Category* | Citation of document, with indication, where appropriate, of the relevant passages | Relevant to claim No. |
|---|---|---|
| X<br><br>Y | JP 2009-209357 A (JAPAN POLYPROPYLENE CORP) 17 September 2009 (2009-09-17) claims, paragraphs [0006], [0036], [0052], [0068], example 6 | 1-7, 10<br><br>8, 9, 11 |
| Y | WO 2009/107720 A1 (TOYO SEIKAN KAISHA, LTD) 03 September 2009 (2009-09-03) paragraphs [0010], [0015] | 1-11 |
| X<br><br>Y | JP 2010-248425 A (JAPAN POLYPROPYLENE CORP) 04 November 2010 (2010-11-04) claims, paragraphs [0038], [0048], [0056], [0057], [0071], example 8 | 1, 2, 4-7, 10<br><br>8, 9, 11 |
| Y | WO 2012/133789 A1 (UBE INDUSTRIES, LTD) 04 October 2012 (2012-10-04) claims, paragraphs [0016], [0018] | 11 |
| A | JP 2011-219519 A (JAPAN POLYPROPYLENE CORP) 04 November 2011 (2011-11-04) entire text | 1-11 |

Form PCT/ISA/210 (second sheet) (January 2015)

**INTERNATIONAL SEARCH REPORT**
**Information on patent family members**

International application No.
**PCT/JP2022/000345**

| Patent document cited in search report | Publication date (day/month/year) | Patent family member(s) | Publication date (day/month/year) |
|---|---|---|---|
| JP 2000-136272 A | 16 May 2000 | (Family: none) | |
| WO 2020/129871 A1 | 25 June 2020 | CN 112689657 A<br>TW 202033650 A | |
| JP 2009-515622 A | 16 April 2009 | US 2009/0124989 A1<br>claims, paragraphs [0023], [0051]<br>WO 2007/057043 A1<br>EP 1960006 A1<br>CN 101360520 A<br>KR 10-2008-0072725 A<br>TW 200727923 A | |
| WO 2015/132267 A1 | 11 September 2015 | US 2017/0216481 A1<br>EP 2915547 A1<br>CN 106232150 A | |
| JP 2016-506437 A | 03 March 2016 | US 2015/0322251 A1<br>claims, paragraphs [0003], [0082], [0083], example IE2<br>WO 2014/095847 A1<br>EP 2746325 A1<br>CN 104837906 A<br>KR 10-2015-0091172 A | |
| JP 2012-161282 A | 30 August 2012 | (Family: none) | |
| JP 2009-209357 A | 17 September 2009 | (Family: none) | |
| WO 2009/107720 A1 | 03 September 2009 | US 2011/0028313 A1<br>paragraphs [0022], [0023], [0037], [0038]<br>EP 2258405 A1<br>CN 101959537 A<br>KR 10-2010-0123849 A | |
| JP 2010-248425 A | 04 November 2010 | (Family: none) | |
| WO 2012/133789 A1 | 04 October 2012 | EP 2692793 A1<br>claims, paragraphs [0015], [0017]-[0020]<br>CN 103562299 A | |
| JP 2011-219519 A | 04 November 2011 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61218606 A
- JP 5194685 A
- JP 7216017 A
- JP 9316147 A
- JP 10212319 A
- JP 2004182981 A
- JP 55075410 A
- JP 2565753 B


### Non-patent literature cited in the description


- Research on Technology of Making to Compound of Plastics (3rd Report). **ICHIRO SHIMOHARA et al.** Prevention of Bad Smell from Polypropylene/Talc Compound. Seikei-Kakou, 2001, vol. 44, 44-47
- *CHEMICAL ABSTRACTS,* 65447-77-0
- Polymer Solution, Polymer Experiment 11. Kyoritsu Shuppan Co., Ltd, 1982, 491
- *CHEMICAL ABSTRACTS,* 14807-96-6
- *CHEMICAL ABSTRACTS,* 52829-07-9
- *CHEMICAL ABSTRACTS,* 152261-33-1
- *CHEMICAL ABSTRACTS,* 300-92-5
- *CHEMICAL ABSTRACTS,* 557-05-1
- *CHEMICAL ABSTRACTS,* 1592-23-0
- *CHEMICAL ABSTRACTS,* 1305-62-0
- *CHEMICAL ABSTRACTS,* 324-27431
- *CHEMICAL ABSTRACTS,* 90498-90-1
- *CHEMICAL ABSTRACTS,* 26741-53-7
- *CHEMICAL ABSTRACTS,* 16545-54-3
- *CHEMICAL ABSTRACTS,* 31570-04-4
- *CHEMICAL ABSTRACTS,* 4221-80-1